# FASCICULE DE BREVET EUROPEEN

(11) **EP 0 628 594 B1**
(45) Date de publication et mention de la délivrance du brevet: **11.03.1998**
(21) Numéro de dépôt: 94200827.7
(22) Date de dépôt: 29.03.1994
(51) Int. Cl.: C08J 5/22, B01D 61/44

(54) **Procédé de fabrication d'une membrane bipolaire et procédé de fabrication d'une solution aqueuse d'hydroxyde de métal alcalin**
Verfahren zur Herstellung einer Bipolarmembran und Verfahren zur Herstellung einer wässrigen Alkalimetallhydroxidlösung
Process of manufacturing of a bipolar membrane and process for producing an aqueous solution of alkali metal hydroxide

(30) Priorité: 08.04.1993 BE 9300351
(43) Date de publication de la demande: 14.12.1994
(73) Titulaire: SOLVAY (Société Anonyme), B-1050 Bruxelles (BE)
(72) Inventeur: Posar, Francesco, I-57013 Rosignano-Solvay/Li (IT); Ricciardi, Mauro, I-57011 Castelnuovo Della Misericordia/L (IT)
(74) Mandataire: Anthoine, Paul

(56) Documents cités:
- EP-A- 0 459 820
- WO-A-89/01059
- GB-A- 2 122 543
- DATABASE WPI Week 8818, Derwent Publications Ltd., London, GB; AN 88-123717 & JP-A-63 068 640 (TOYO SODA MFG KK) 28 Mars 1988

## Description

La présente invention concerne un procédé pour la fabrication de membranes bipolaires.

Les membranes bipolaires sont des éléments constitutifs des cellules d'électrodialyse. Ces dernières sont bien connues en technique où elles sont notamment utilisées pour la fabrication d'acides et de bases au départ de leurs sels.

Dans des procédés généralement utilisés pour fabriquer des membranes bipolaires on accole une membrane cationique et une membrane anionique, qui ont au préalable subi un préconditionnement. A cet effet, dans la demande internationale WO 89/01059 (UNISEARCH LIMITED), on décrit un procédé de fabrication d'une membrane bipolaire, selon lequel on traite une membrane cationique et une membrane anionique séparément avec une solution alcaline d'un sel d'un métal autre que le sodium ou le potassium, on accole ensuite la membrane cationique à la membrane anionique, puis on traite l'assemblage ainsi obtenu avec une solution aqueuse alcaline. Dans une forme de réalisation modifiée de ce procédé connu, la membrane cationique et la membrane anionique sont traitées avec la solution aqueuse alcaline avant d'être accolées l'une à l'autre. Dans ces procédés connus, la solution alcaline utilisée est une solution d'hydroxyde de sodium et on préconise d'y incorporer le sel métallique.

Les membranes bipolaires obtenues au moyen des procédés connus prédécrits se caractérisent généralement par une bonne cohésion mécanique et une résistance électrique modérée.

L'invention a pour objectif de fournir des membranes bipolaires de performances au moins comparables à celles des membranes obtenues au moyen des procédés connus prédécrits, de manière plus simple et plus économique.

En conséquence, l'invention concerne un procédé de fabrication d'une membrane bipolaire, selon lequel on traite une membrane cationique avec un composé d'un métal polyvalent et avec une solution aqueuse d'hydroxyde de métal alcalin, puis on l'accole à une membrane anionique, le procédé se caractérisant en ce que l'hydroxyde de métal alcalin comprend de l'hydroxyde de lithium.

On entend désigner par membrane cationique une feuille mince, non poreuse, sélectivement perméable aux cations et imperméable aux anions. Les membranes cationiques utilisables dans le procédé selon l'invention doivent être en une matière inerte vis-à-vis des solutions aqueuses acides ou basiques. Des membranes cationiques utilisables dans le procédé selon l'invention sont par exemple des feuilles en polymère fluoré contenant des groupements fonctionnels dérivés d'acides sulfoniques, d'acides carboxyliques ou d'acides phosphoniques ou des mélanges de tels groupements fonctionnels, ces groupements jouant le rôle de sites cationiques fixes de la membrane. Des membranes particulièrement adaptées à cette application de la cellule selon l'invention sont celles connues sous le nom RAIPORE (PALL RAI).

Par définition, une membrane anionique est une feuille mince, non poreuse, sélectivement perméable aux anions et imperméable aux cations. Des membranes anioniques utilisables dans le procédé selon l'invention sont des feuilles en un matériau polymérique inerte vis-à-vis des solutions aqueuses acides ou basiques et comprenant des groupements d'ammonium quaternaire jouant le rôle de sites anioniques fixes.

Dans la pratique, les membranes cationiques ne sont pas idéalement imperméables aux anions et les membranes anioniques ne sont pas idéalement imperméables aux cations. Par définition, le rendement de courant d'une membrane cationique est la fraction molaire du cation qui traverse effectivement la membrane sous l'action d'un Faraday. De manière similaire, le rendement de courant d'une membrane anionique est la fraction molaire de l'anion qui traverse effectivement la membrane sous l'action d'un Faraday.

Les membranes bipolaires sont des membranes qui présentent, sur une face, les propriétés d'une membrane cationique et, sur l'autre face, les propriétés d'une membrane anionique.

Dans le procédé selon l'invention, le métal polyvalent est avantageusement sélectionné parmi les éléments de transition. Le chrome, le fer, le nickel, le ruthénium, le zirconium et le rhodium sont préférés. Le chrome convient particulièrement bien.

Le composé de métal polyvalent est de préférence un sel inorganique. Celui-ci peut avantageusement être sélectionné parmi les chlorures, les nitrates, les phosphates et les sulfates. Les chlorures sont préférés et, parmi ceux-ci, le chlorure chromique est spécialement recommandé. On utilise avantageusement du chlorure chromique hydraté, le chlorure chromique hexahydraté étant préféré.

Le traitement de la membrane cationique avec le composé de métal polyvalent a pour fonction de substituer une partie au moins des cations mobiles ou co-ions de la membrane cationique par des ions du métal polyvalent. En principe, le nombre d'ions de métal polyvalent présents dans la membrane cationique à l'issue du traitement n'est pas critique. On cherche toutefois, généralement, à incorporer dans la membrane cationique une quantité de cations du métal polyvalent au moins égale à 0,001 (de préférence 0,01) moles par m² de la face de la membrane cationique destinée à venir en contact avec la membrane anionique, les valeurs de 0,02 à 0,03 par m² convenant généralement bien.

Le traitement de la membrane cationique avec le composé de métal polyvalent peut avantageusement être effectué par mise en contact de la membrane cationique avec une solution aqueuse du composé de métal polyvalent, par exemple en immergeant la membrane cationique dans un bain aqueux dudit composé. Dans cette forme de réalisation de l'invention, la concentration de la solution aqueuse n'est pas critique, les solutions concentrées étant toutefois préférées. En pratique, on recommande d'utiliser des solutions aqueuse dont la concentration en composé de métal polyvalent est au moins égale à 0,05 (de préférence à 0,1) mole/l. La concentration maximum admissible de la solution aqueuse du composé de métal polyvalent est celle qui correspond à la saturation et elle dépend dès lors de divers paramètres tels que la nature du composé de métal polyvalent, la température de la solution et la valeur du pH de celle-ci. On préfère mettre en oeuvre des solutions à une température voisine de la température ambiante, par exemple de 15 à 35 °C.

Dans le procédé selon l'invention, le composé de métal polyvalent peut être mis en oeuvre à l'état d'une solution acide. Dans cette forme de réalisation de l'invention, on peut notamment sélectionner une solution acide dont le pH est inférieur à 3, par exemple compris entre 0,05 et 1, telle qu'une solution aqueuse d'acide chlorhydrique. Cette forme de réalisation de l'invention permet de mettre en oeuvre des solutions aqueuses concentrées en composé de métal polyvalent, qui contiennent par exemple, par litre, de 0,8 à 1,5 mole dudit composé, dans le cas où celui-ci est du chlorure chromique hexahydraté.

On préfère toutefois, selon une autre forme de réalisation de l'invention, que le composé de métal polyvalent soit mis en oeuvre à l'état d'une solution basique, dont le pH est avantageusement au moins égal à 10, de préférence à 12. A cet effet, on peut avantageusement utiliser une solution aqueuse d'hydroxyde de métal alcalin, par exemple de sodium, de potassium ou de lithium. On préfère sélectionner une solution aqueuse d'hydroxyde de lithium. Les solutions aqueuses comprenant au moins 1 mole d'hydroxyde de lithium sont spécialement recommandées. En pratique, on a intérêt à utiliser une solution aqueuse la plus concentrée possible en hydroxyde de lithium.

Le traitement de la membrane avec le composé de métal polyvalent peut être exécuté indifféremment à la température ambiante ou à haute température, celle-ci devant toutefois rester inférieure à la température de dégradation thermique de la membrane cationique. La durée du traitement doit être suffisante pour incorporer le nombre souhaité de cations du métal polyvalent dans la membrane cationique. Elle va dès lors dépendre de nombreux paramètres tels que le composé de métal polyvalent sélectionné, la concentration de la solution et sa température.

Selon l'invention, la membrane cationique est également traitée avec une solution aqueuse d'hydroxyde de métal alcalin comprenant de l'hydroxyde de lithium.

On entend désigner par solution aqueuse d'hydroxyde de métal alcalin comprenant de l'hydroxyde de lithium, une solution aqueuse d'hydroxyde de métal alcalin qui contient une quantité substantielle d'hydroxyde de lithium. Outre l'hydroxyde de lithium, la solution aqueuse de métal alcalin peut par exemple comprendre de l'hydroxyde de sodium ou de l'hydroxyde de potassium. En pratique, des solutions aqueuses d'hydroxyde de métal alcalin utilisables dans le procédé selon l'invention sont celles dont la teneur en moles d'hydroxyde de lithium est d'au moins 50 pour cent d'hydroxyde de métal alcalin. Des solutions aqueuses d'hydroxyde de métal alcalin spécialement avantageuses sont celles dont la teneur en moles d'hydroxyde de lithium est d'au moins 80 (de préférence au moins 90) pour cent d'hydroxyde de métal alcalin, les solutions dont l'hydroxyde de métal alcalin est constitué en totalité d'hydroxyde de lithium étant préférées.

Dans le procédé selon l'invention, le traitement avec la solution aqueuse d'hydroxyde de métal alcalin peut être exécuté en même temps que le traitement avec le composé de métal polyvalent, en utilisant, à cet effet, une solution aqueuse du composé de métal polyvalent et d'hydroxyde de lithium.

Dans une forme de réalisation préférée du procédé selon l'invention, le traitement avec la solution aqueuse d'hydroxyde de métal alcalin est exécuté après le traitement avec le composé de métal polyvalent. Dans cette forme de réalisation préférée, il est préférable que la solution aqueuse d'hydroxyde de métal alcalin ne contienne pas de composé de métal polyvalent. Selon une variante d'exécution avantageuse de cette forme de réalisation préférée de l'invention, on traite la membrane cationique d'abord avec une solution aqueuse d'hydroxyde de lithium comprenant le composé polyvalent, puis avec la solution aqueuse d'hydroxyde de métal alcalin définie plus haut.

Dans la forme de réalisation préférée qui vient d'être décrite et sa variante d'exécution, le traitement de la membrane cationique avec la solution aqueuse d'hydroxyde de métal alcalin peut par exemple être réalisé par pulvérisation de la solution sur la face de la membrane cationique destinée à venir en contact avec la membrane anionique, ou par imprégnation de ladite face avec la solution par exemple au moyen d'une brosse. Un moyen préféré consiste à immerger la membrane dans un bain de la solution.

Bien que ne souhaitant pas être liés par une explication théorique, les inventeurs pensent que le traitement avec la solution aqueuse d'hydroxyde de métal alcalin a pour fonction de convertir les cations du métal polyvalent qui sont présents dans la membrane cationique en hydroxyde métallique. Il s'impose dès lors, conformément à l'invention, de mettre en oeuvre une quantité théorique au moins suffisante de la solution d'hydroxyde de métal alcalin pour convertir une fraction substantielle des cations du métal polyvalent de la membrane cationique en hydroxyde métallique, ladite fraction étant généralement au moins égale à 50, de préférence à 90 % des cations polyvalents présents dans la membrane bipolaire. La quantité optimum à mettre en oeuvre pour ce qui concerne la solution aqueuse d'hydroxyde de métal alcalin va dès lors dépendre de divers paramètres tels que la quantité de cations du métal polyvalent dans la membrane cationique, la nature du métal polyvalent, notamment sa valence, la concentration de la solution et sa température et elle peut être déterminée dans chaque cas particulier par un travail de routine au laboratoire. En pratique, on obtient généralement de bons résultats avec des solutions d'hydroxyde de métal alcalin contenant au moins 0,5 (de préférence 0,8) mole d'hydroxyde de métal alcalin par litre, la teneur maximum admissible correspondant à la saturation. Des teneurs de 0,8 à 1,2 moles d'hydroxyde de métal alcalin par litre conviennent généralement bien. Bien que des solutions à la température ambiante puissent convenir, on préfère mettre en oeuvre des solutions chaudes, par exemple à une température de 50 à 90 °C.

En variante, le procédé selon l'invention peut éventuellement comprendre un lavage optionnel de la membrane cationique avec de l'eau déminéralisée, entre le traitement avec le composé de métal polyvalent et le traitement avec la solution d'hydroxyde de sodium, de même qu'après le traitement avec la solution aqueuse d'hydroxyde de métal alcalin. Le lavage est généralement effectué à la température ambiante, bien que des températures plus basses ou plus élevées puissent également convenir.

Tous moyens appropriés peuvent être mis en oeuvre pour accoler la membrane cationique à la membrane anionique. Un moyen préféré, selon une forme de réalisation particulière de l'invention, consiste à appliquer et presser les deux membranes l'une sur l'autre, à l'état humide, en évitant la formation de poches d'air entre les deux membranes. A cet effet, dans cette forme de réalisation de l'invention, la membrane cationique et la membrane anionique sont traitées séparément avec de l'eau déminéralisée avant d'être appliquées l'une sur l'autre. On peut opérer à la température ambiante ou à haute température, à condition que celle-ci reste inférieure à la température de dégradation thermique de la membrane anionique ou de la membrane cationique.

La membrane bipolaire recueillie à l'issue du procédé selon l'invention doit de préférence être conservée à l'état humide, avant son utilisation dans une cellule d'électrodialyse.

Dans la mise en oeuvre du procédé selon l'invention, la membrane anionique peut subir un traitement similaire à celui de la membrane cationique avant d'être accolée à la membrane cationique. A cet effet, elle peut être traitée successivement avec le composé de métal polyvalent et avec la solution aqueuse d'hydroxyde de métal alcalin, dans les conditions énoncées plus haut dans le cas de la membrane cationique. Dans cette forme de réalisation du procédé selon l'invention, le composé de métal polyvalent utilisé pour le traitement de la membrane anionique peut être identique ou différent du composé de métal polyvalent utilisé pour le traitement de la membrane cationique. On utilise de préférence le même composé de métal polyvalent pour le traitement de la membrane cationique et pour le traitement de la membrane anionique. La solution d'hydroxyde de métal alcalin utilisée pour le traitement de la membrane anionique peut être identique à celle utilisée pour le traitement de la membrane cationique. En variante, elle peut être sensiblement exempte d'hydroxyde de lithium.

Dans une autre forme de réalisation du procédé, qui est préférée, seule la membrane cationique est soumise au traitement avec le composé de métal polyvalent et avec la solution aqueuse d'hydroxyde de métal alcalin, la membrane anionique étant soumise, avant d'être appliquée sur la membrane cationique, à un traitement consistant essentiellement en un lavage avec de l'eau déminéralisée. Cette forme de réalisation du procédé selon l'invention présente l'avantage d'une plus grande simplification, sans nuire aux performances de la membrane bipolaire.

La membrane bipolaire obtenue au moyen du procédé selon l'invention tel que décrit ci-dessus est bien adaptée à la décomposition électrochimique de l'eau et elle peut dès lors être utilisée dans les techniques d'électrodialyse mettant en oeuvre des solutions aqueuses. Elle trouve ainsi une utilisation pour la fabrication d'acides et de bases au départ de leurs sels. La membrane bipolaire obtenue au moyen du procédé selon l'invention trouve une application particulièrement intéressante pour la fabrication de solutions aqueuses d'hydroxyde de métal alcalin (spécialement d'hydroxyde de sodium) par électrodialyse de solutions aqueuses de sels de métaux alcalins, tels que du chlorure, du carbonate, du phosphate, du sulfate ou de l'acétate de métal alcalin.

L'invention concerne dès lors également un procédé de fabrication d'une solution aqueuse d'hydroxyde de métal alcalin par électrodialyse d'une solution aqueuse d'un sel de métal alcalin, selon lequel on exécute l'électrodialyse en présence d'une membrane bipolaire obtenue au moyen du procédé conforme à l'invention, défini plus haut.

L'invention s'applique spécialement à la fabrication de solutions aqueuses d'hydroxyde de sodium par électrodialyse de solutions aqueuses de chlorure de sodium, par exemple au moyen de la technique décrite dans le brevet US-A-4238305.

Les exemples qui suivent servent à illustrer l'invention.

Dans les exemples, on a utilisé des membranes cationiques et des membranes anioniques RAIPORE (Pall Rai). Les membranes cationiques RAIPORE sont des membranes en polymère fluoré portant des groupements fonctionnels dérivés d'acide carboxylique et les membranes anioniques RAIPORE sont des membranes en polymère portant des groupements fonctionnels dérivés d'ammonium quaternaire.

### Exemple 1 (conforme à l'invention)

Dans cet exemple, on a utilisé une membrane cationique RAIPORE R-4010 et une membrane anionique RAIPORE R-1030.

On a fait subir à la membrane cationique un traitement comprenant les étapes successives suivantes :
- une immersion dans une solution aqueuse molaire d'acide chlorhydrique à la température ambiante, pendant environ 15 minutes;
- une immersion dans une solution aqueuse acide de trichlorure chromique hexahydraté (contenant 300 g de trichlorure chromique hexahydraté et 50 g d'acide chlorhydrique par litre) à la température ambiante, pendant 24 heures;
- un lavage par immersion dans un bain d'eau déminéralisée à la température ambiante, pendant 15 minutes;
- une immersion dans une solution aqueuse molaire d'hydroxyde de lithium à 70 °C, pendant 15 minutes;
- un lavage par immersion dans un bain d'eau déminéralisée à la température ambiante, pendant quelques secondes.

On a par ailleurs soumis la membrane anionique à une immersion dans un bain d'eau déminéralisée à la température ambiante, pendant 1 heure.

A l'issue des traitements respectifs de la membrane cationique et de la membrane anionique, on les a appliquées l'une sur l'autre à l'état humide et sous faible pression, de manière à former une membrane bipolaire.

Pour évaluer les performances de la membrane bipolaire ainsi obtenue, on a utilisé une cellule de mesure électrochimique divisée en quatre compartiments successifs par la membrane bipolaire à tester, disposée verticalement, et deux membranes cationiques de marque NAFION (DUPONT), disposées verticalement, de part et d'autre de la membrane bipolaire. Dans les deux compartiments d'extrémité de la cellule, on a disposé respectivement une anode et une cathode en nickel. La membrane bipolaire a été orientée dans la cellule, de manière que sa face anionique soit dirigée vers l'anode. Dans les deux compartiments d'extrémité, on a fait circuler une solution à 0,10 % en poids d'hydroxyde de sodium. Dans le compartiment médian, comprenant la face anionique de la membrane bipolaire, on a fait circuler une solution aqueuse 1M d'hydroxyde de sodium et, dans le compartiment médian comprenant la face cationique de la membrane bipolaire, on a fait circuler une solution 1M d'acide chlorhydrique. Les compartiments de la cellule ont été maintenus à la température ambiante.

L'anode et la cathode de la cellule ont été raccordées aux bornes d'une source de courant, réglée de manière à générer, dans la cellule, un courant de 10 kA/m² de surface de la membrane bipolaire. On a mesuré, au moyen de capillaires de Luggin, la différence de potentiel entre les deux faces de la membrane bipolaire. Celle-ci s'est stabilisée entre 0,95 et 1,05 V.

### Exemple 2 (conforme à l'invention)

On a répété l'essai de l'exemple 1, en utilisant une membrane cationique RAIPORE R-4010 et une membrane anionique RAIPORE R-4030.

On a mesuré la différence de potentiel entre les deux faces de la membrane bipolaire, de la manière et dans les conditions exposées à l'exemple 1. La différence de potentiel s'est stabilisée entre 0,93 et 0,99 V.

### Exemple 3 (conforme à l'invention)

Dans cet exemple, on a également utilisé une membrane cationique RAIPORE R-4010 et une membrane anionique RAIPORE R-4030. On a fait subir à la membrane cationique et à la membrane anionique le traitement qui, à l'exemple 2, a été appliqué à la membrane cationique.

On a mesuré la différence de potentiel entre les deux faces de la membrane bipolaire, de la manière et dans les conditions exposées à l'exemple 1. La différence de potentiel s'est stabilisée entre 1,00 et 1,06 V.

### Exemple 4 (de référence)

On a répété toutes les conditions de l'essai de l'exemple 3, sauf en ce qui concerne la solution aqueuse d'hydroxyde de lithium, qui a été remplacée par une solution aqueuse d'hydroxyde de sodium. La différence de potentiel entre les deux faces de la membrane bipolaire s'est stabilisée à une valeur moyenne de 1,81 V.

Une comparaison des exemples 3 et 4 fait apparaître l'avantage apporté par l'invention.

### Exemple 5 (conforme à l'invention)

On a répété toutes les conditions de l'essai de l'exemple 2, sauf que l'immersion de la membrane cationique dans la solution aqueuse molaire d'acide chlorhydrique a été supprimée. La différence de potentiel entre les deux faces de la membrane bipolaire s'est stabilisée à une valeur moyenne de 0,97 V.

### Exemple 6 (conforme à l'invention)

On a utilisé, comme dans les exemples 2 à 5, une membrane cationique RAIPORE R.4010 et une membrane anionique RAIPORE R.4030.

On a fait subir à la membrane cationique un traitement comprenant les étapes successives suivantes :
- une immersion dans une solution aqueuse basique de trichlorure chromique hexahydraté (contenant 50 g de trichlorure chromique hexahydraté et 2 moles d'hydroxyde de lithium par litre) à la température ambiante, pendant 24 heures;
- un lavage par immersion dans un bain d'eau déminéralisée à la température ambiante, pendant 15 minutes;
- une immersion dans une solution aqueuse molaire d'hydroxyde de lithium à 70 °C, pendant 15 minutes;
- un lavage par immersion dans un bain d'eau déminéralisée à la température ambiante, pendant quelques secondes.

On a par ailleurs soumis la membrane anionique à une immersion dans un bain d'eau déminéralisée à la température ambiante.

A l'issue des traitements respectifs de la membrane cationique et de la membrane anionique, on les a appliquées l'une sur l'autre à l'état humide et sous faible pression, de manière à former une membrane bipolaire.

On a mesuré la différence de potentiel entre les deux faces de la membrane bipolaire, de la manière exposée à l'exemple 1. La différence de potentiel s'est établie à une valeur moyenne de 0,85 V.

### Exemple 7 (de référence)

On a répété l'essai de l'exemple 6, en y apportant les différences suivantes :
- on a utilisé pour la solution basique de trichlorure chromique une solution aqueuse contenant 50 g de trichlorure chromique hexahydraté et 2 moles d'hydroxyde de sodium;
- la solution molaire d'hydroxyde de lithium a été remplacée par une solution molaire d'hydroxyde de sodium.

La différence de potentiel entre les deux faces de la membrane bipolaire s'est stabilisée à une valeur moyenne de 1,50 V.

### Exemple 8 (de référence)

Dans cet exemple, on a fait subir à la membrane cationique et à la membrane anionique le traitement qui, à l'exemple 7, a été appliqué à la membrane cationique. La différence de potentiel entre les deux faces de la membrane bipolaire s'est établie à une valeur moyenne de 0,90 V.

Une comparaison du résultat de l'exemple 6 (conforme à l'invention) avec ceux des exemples 7 et 8 fait apparaître le progrès apporté par l'invention.

## Revendications

1. Procédé de fabrication d'une membrane bipolaire, selon lequel on traite une membrane cationique avec un composé d'un métal polyvalent et avec une solution aqueuse d'hydroxyde de métal alcalin, puis on l'accole à une membrane anionique, caractérisé en ce que l'hydroxyde de métal alcalin comprend de l'hydroxyde de lithium.

2. Procédé selon la revendication 1, caractérisé en ce qu'on traite la membrane cationique, d'abord avec le composé de métal polyvalent, puis avec la solution aqueuse d'hydroxyde de métal alcalin, ladite solution étant sensiblement exempte de composé de métal polyvalent.

3. Procédé selon la revendication 1 ou 2, caractérisé en ce que l'hydroxyde de métal alcalin comprend au moins 90 moles d'hydroxyde de lithium pour cent.

4. Procédé selon l'une quelconque des revendications 1 à 3, caractérisé en ce que le métal polyvalent comprend du chrome.

5. Procédé selon l'une quelconque des revendications 1 à 4, caractérisé en ce que pour traiter la membrane cationique avec le composé de métal polyvalent, on la met en contact avec une solution aqueuse dudit composé.

6. Procédé selon la revendication 5, caractérisé en ce que la solution du composé de métal polyvalent est une solution basique.

7. Procédé selon la revendication 6, caractérisé en ce que la solution basique est une solution aqueuse d'hydroxyde de métal alcalin présentant une valeur de pH au moins égale à 12.

8. Procédé selon la revendication 6 ou 7, caractérisé en ce que la solution aqueuse du composé de métal polyvalent comprend au moins 0,1 mole dudit composé par litre.

9. Procédé selon l'une quelconque des revendications 1 à 8, caractérisé en ce qu'avant d'accoler la membrane cationique à la membrane anionique, on soumet la membrane anionique à un traitement qui est essentiellement constitué d'un lavage avec de l'eau déminéralisée.

10. Procédé de fabrication d'une solution aqueuse d'hydroxyde de métal alcalin par électrodialyse d'une solution aqueuse d'un sel de métal alcalin, caractérisé en ce qu'on exécute l'électrodialyse en présence d'une membrane bipolaire obtenue au moyen d'un procédé conforme à l'une quelconque des revendications 1 à 9.

## Patentansprüche

1. Verfahren zur Herstellung einer bipolaren Membran, gemäß dem man eine kationische Membran mit einer Verbindung eines mehrwertigen Metalls und mit einer wäßrigen Alkalimetallhydroxidlösung behandelt, man sie dann an eine anionische Membran anfügt, dadurch gekennzeichnet, daß das Alkalimetallhydroxid Lithiumhydroxid umfaßt.

2. Verfahren gemäß Anspruch 1, dadurch gekennzeichnet, daß man die kationische Membran zuerst mit der Verbindung des mehrwertigen Metalls, dann mit der wäßrigen Alkalimetallhydroxidlösung behandelt, wobei besagte Lösung deutlich frei von Verbindung des mehrwertigen Metalls ist.

3. Verfahren gemäß Anspruch 1 oder 2. dadurch gekennzeichnet, daß das Alkalimetallhydroxid wenigstens 90 mol-% Lithiumhydroxid umfaßt.

4. Verfahren gemäß einem der Ansprüche 1 bis 3, dadurch gekennzeichnet, daß das mehrwertige Metall Chrom umfaßt.

5. Verfahren gemäß einem der Ansprüche 1 bis 4, dadurch gekennzeichnet, daß man für die Behandlung der kationischen Membran mit der Verbindung des mehrwertigen Metalls sie mit einer wäßrigen Lösung besagter Verbindung in Kontakt bringt.

6. Verfahren gemäß Anspruch 5, dadurch gekennzeichnet, daß die Lösung der Verbindung des mehrwertigen Metalls eine basische Lösung ist.

7. Verfahren gemäß Anspruch 6, dadurch gekennzeichnet, daß die basische Lösung eine wäßrige Alkalimetallhydroxidlösung ist, die einen pH-Wert von wenigstens gleich 12 aufweist.

8. Verfahren gemäß Anspruch 6 oder 7, dadurch gekennzeichnet, daß die wäßrige Lösung der Verbindung des mehrwertigen Metalls wenigstens 0,1 mol besagter Verbindung pro Liter umfaßt.

9. Verfahren gemäß einem der Ansprüche 1 bis 8, dadurch gekennzeichnet, daß man vor dem Anfügen der kationischen Membran an die anionische Membran die anionische Membran einer Behandlung unterzieht, die im wesentlichen aus einer Wäsche mit entmineralisiertem Wasser besteht.

10. Verfahren zur Herstellung einer wäßrigen Alkalimetallhydroxidlösung durch Elektrodialyse einer wäßrigen Lösung eines Alkalimetallsalzes, dadurch gekennzeichnet, daß man die Elektrodialyse in Gegenwart einer bipolaren Membran, die mittels einem Verfahren gemäß einem der Ansprüche 1 bis 9 erhalten wurde, ausführt.

## Claims

1. Process for the manufacture of a bipolar membrane, according to which a cationic membrane is treated with a compound of a polyvalent metal and with an aqueous alkali metal hydroxide solution and is then joined side by side to an anionic membrane, characterized in that the alkali metal hydroxide comprises lithium hydroxide.

2. Process according to Claim 1, characterized in that the cationic membrane is treated first with the polyvalent metal compound and then with the aqueous alkali metal hydroxide solution, the said solution being substantially free of polyvalent metal compound.

3. Process according to Claim 1 or 2, characterized in that the alkali metal hydroxide comprises at least 90 mol % of lithium hydroxide.

4. Process according to any one of Claims 1 to 3, characterized in that the polyvalent metal comprises chromium.

5. Process according to any one of Claims 1 to 4, characterized in that, in order to treat the cationic membrane with the polyvalent metal compound, it is brought into contact with an aqueous solution of the said compound.

6. Process according to Claim 5, characterized in that the solution of the polyvalent metal compound is a basic solution.

7. Process according to Claim 6, characterized in that the basic solution is an aqueous alkali metal hydroxide solution having a pH value at least equal to 12.

8. Process according to Claim 6 or 7, characterized in that the aqueous solution of the polyvalent metal compound comprises at least 0.1 mol per litre of the said compound.

9. Process according to any one of Claims 1 to 8, characterized in that, before joining the cationic membrane and the anionic membrane side by side, the anionic membrane is subjected to a treatment which consists essentially of a washing with demineralized water.

10. Process for the manufacture of an aqueous alkali metal hydroxide solution by electrodialysis of an aqeuous alkali metal salt solution, characterized in that electrodialysis is carried out in the presence of a bipolar membrane obtained by means of a process in accordance with any one of Claims 1 to 9.
